# EUROPÄISCHE PATENTSCHRIFT

(11) **EP 1 815 124 B1**
(45) Veröffentlichungstag und Bekanntmachung des Hinweises auf die Patenterteilung: **20.01.2016**
(21) Anmeldenummer: 05815874.2
(22) Anmeldetag: 23.11.2005
(51) Int. Cl.: F02F 3/28, B22D 19/00, F02B 23/06

(54) **VERFAHREN ZUR HERSTELLUNG EINES KOLBENS FUER EINEN VERBRENNUNGSMOTOR**
METHOD FOR PRODUCING A PISTON FOR A COMBUSTION ENGINE
PROCEDE DE PRODUCTION DE PISTON POUR MOTEUR A COMBUSTION INTERNE

(30) Priorität: 24.11.2004 DE 102004056519
(43) Veröffentlichungstag der Anmeldung: 08.08.2007
(73) Patentinhaber: MAHLE GMBH, 70376 Stuttgart (DE)
(72) Erfinder: SANDER, Wilfried, 74172 Neckarsulm (DE)
(74) Vertreter: Jooß, Martin
(86) Internationale Anmeldenummer: PCT/DE2005/002108
(87) Internationale Veröffentlichungsnummer: WO 2006/056183

(56) Entgegenhaltungen:
- EP-A- 1 138 418
- DE-A1- 2 921 952
- US-A- 4 587 177
- US-A- 4 966 221
- PATENT ABSTRACTS OF JAPAN Bd. 012, Nr. 179 (M-701), 26. Mai 1988 (1988-05-26) -& JP 62 288775 A (KOBE STEEL LTD), 15. Dezember 1987 (1987-12-15)
- PATENT ABSTRACTS OF JAPAN Bd. 014, Nr. 375 (M-1010), 14. August 1990 (1990-08-14) & JP 02 137661 A (ATSUGI UNISIA CORP), 25. Mai 1990 (1990-05-25)

## Beschreibung

Die Erfindung betrifft ein Verfahren zur Herstellung eines Kolbens für einen Verbrennungsmotor mit einer Verbrennungsmulde, wobei eine ringförmige Faserpreform, die zur Verstärkung des Randes der Verbrennungsmulde vorgesehen ist, in der Gießform befestigt wird, anschließend eine siliziumarme Aluminium-Kupferschmelze in die Gießform eingeleitet wird, und dabei eine solche Druckdifferenz zwischen der Aluminium-Kupfer-Schmmelze und der Faserpreform erzeugt wird, dass die Faserpreform vollständig von der Aluminium-Kupfer-Schmelze infiltriert wird, wodurch die Faserpreform in den Muldenrand eingeformt wird.

Dieses Herstellungsverfahren ist aus der Patentschrift DE 34 30 056 C1 bekannt. Nachteilig ist hierbei, dass eine Aluminium-Kupfer-Schmelze beim Erstarren ein relativ großes Volumendefizit erfährt, was eine sehr große Mikroporosität im erstarrten Material und damit eine erhebliche Abnahme der Festigkeit dieses Materials bewirkt.

Hiervon ausgehend ist es Aufgabe der Erfindung, das bekannte Verfahren zur Herstellung von Kolben aus einer siliziumarmen Aluminium-Kupfer-Legierung insoweit zu verbessern, dass damit Kolben herstellbar sind, die für eine Zünddruckbelastung von über 200 bar geeignet sind, und dass damit die Festigkeit des Kolbenmaterials so weit verbessert wird, dass in den Kolbenboden problemlos hinterschnittene und scharfkantige Verbrennungsmulden einformbar sind.

Gelöst wird diese Aufgabe gemäß Patentanspruch 1 durch Nachverdichten des nach dem oben ewähnten Verfahren hergestellten Kolbenrohlings auf dem Wege des heißisostatischen Pressens, wodurch sich ein qualitativ sehr hochwertiger und hochbelastbarer Kolben ergibt.

Zweckmäßige Ausgestaltungen der Erfindung sind Gegenstand der Unteransprüche, wobei insbesondere durch Ausbilden einer verschleißfesten Aluminiumoxidschicht auf den Flanken und den Grundflächen der 2. und 3. Ringnut mittels anodischer Oxidation und durch Rollieren der Nabenbohrungen eine weitere Qualitätsverbesserung des erfindungsgemäßen Kolbens erreicht wird.

Das erfindungsgemäße Verfahren zur Herstellung eines Kolbens für einen Verbrennungsmotor wird im Folgenden anhand der Zeichnungen beschrieben. Es zeigen
- Fig. 1: eine Draufsicht auf den Boden eines nach dem erfindungsgemäßen Verfahrens hergestellten Kolbens und
- Fig. 2: einen zweigeteilten Schnitt entlang der Achse des Kolbens, wobei die linke Bildhälfte einen Schnitt durch den Kolben entlang der Nabenachse B und die rechte Bildhälfte einen Schnitt entlang einer senkrecht dazu liegenden Achse A zeigt.

Zur Ausführung des erfindungsgemäßen Verfahrens zur Herstellung eines Kolbens 1 für einen Verbrennungsmotor, insbesondere für einen Dieselmotor, wird eine weitestgehend siliziumfreie Aluminium-Kupfer-Legierung verwendet, die wie folgt zusammengesetzt sein kann, wobei die Zahlenangaben die Gewichtsprozente der einzelnen Legierungsbestandteile angeben:

| | |
|---|---|
| Cu | 3,5 bis 4,5 |
| Ni | 1,7 bis 2,3 |
| Mg | 1,2 bis 1,8 |
| Si | maximal 0,7 |
| Fe | maximal 1,0 |
| Mn | maximal 0,35 |
| Ti | maximal 0,25 |
| Zn | maximal 0,35 |
| Al | Rest. |

Eine weitere zur Herstellung des Kolbens 1 nach dem erfindungsgemäßen Verfahren geeignete Legierung besteht aus den folgenden Bestandteilen: (Zahlenangaben sind Gewichtsprozente)

| | |
|---|---|
| Cu | 1,8 bis 2,7 |
| Mg | 1,2 bis 1,8 |
| Fe | 0,9 bis 1,4 |
| Ni | 0,8 bis 1,4 |
| Si | maximal 0,25 |
| Al | Rest. |

Zur Herstellung des Kolbens 1 mit einer Verbrennungsmulde 2 wird ein Gießverfahren verwendet, mit dessen Hilfe der Rand der Verbrennungsmulde 2 mittels einer Faserpreform 3 verstärkt und der Kolben 1 zudem mit einem Ringträger 4 für einen Verdichtungsring versehen werden kann. Dieses Gießverfahrens muss die Eigenschaft haben, eine ausreichend große Druckdifferenz zwischen Schmelze und Faserpreform 3 zu erzeugen, damit die Faserpreform 3 vollständig mit der beim Gießen verwendeten Schmelze infiltriert wird, bevor diese erstarrt. Danach sind sowohl die einzelnen Fasern der Faserpreform 3 fest mit der erstarrten Schmelze als auch die Faserpreform 3 selber fest mit dem restlichen Kolben 1 verbunden.

Die Fasern der Faserpreform 3 sind als Kurzfasern aus einem keramischen Werkstoff, beispielsweise aus Aluminiumoxid, ausgebildet. Die Faserpreform 3 in Gestalt eines ringförmigen Körpers mit recheckigem Querschnitt wird hergestellt, indem die Fasern zunächst zu einer wässrigen, ein Bindemittel enthaltenden Suspension aufbereitet werden. Anschließend wird die Suspension in eine wasserdurchlässige, der Gestalt der Faserpreform 3 entsprechenden Form eingefüllt, in der das Wasser aus der Suspension abgeschieden wird. Der sich ergebende Körper in Gestalt der Faserpreform 3 wird getrocknet und kann zur Verbesserung dessen Festigkeit mechanisch nachgepresst werden. Angestrebt wird hierbei ein Anteil der Fasern je Volumeneinheit von 10% bis 20%.

Aus dem Stand der Technik sind mehrere Gießverfahren zur Herstellung des erfindungsgemäßen Kolbens bekannt. Bei einem Gießverfahren, dem direkten Flüssigpressen, werden zunächst die Faserpreform 3 und der Ringträger 4 in eine stationäre Gießform eingelegt und fixiert. Die Faserpreform 3 kommt dabei koaxial zur Kolbenachse 10 und in der Ebene des Kolbenbodens 5 zu liegen, und der Ringträger 4 wird koaxial zur Kolbenachse 10 und in einem der axialen Länge des Feuersteges 6 entsprechenden Abstand vom Kolbenboden 5 positioniert. Anschließend wird flüssige Aluminiumschmelze in die Gießform eingefüllt und ein axial beweglicher Gießformkern in die Gießform eingesenkt, der zunächst die Gießform verschließt und dann Druck auf die langsam erstarrende Schmelze ausübt.

Der auf die Aluminiumschmelze ausgeübte Druck bewirkt zum einen, dass die Faserpreform 3 von der Schmelze infiltriert wird. Zum anderen führt der auf die Schmelze ausgeübte Druck zu einer Verringerung der Porosität des erstarrten Aluminiums. Dies kann eine für bestimmte Zwecke ausreichende Festigkeit des Kolbenmaterials ergeben.

Ein weiteres Gießverfahren mit der Bezeichnung, RMD-Gießverfahren, eine Abkürzung für "robot aided medium pressure diecastung", ist ebenfalls gut dazu geeignet, den erfindungsgemäßen Kolben herzustellen. Hierbei wird zunächst der Ringträger 4 in der Gießform an der dafür vorgesehenen Stelle befestigt. Anschließend wird die Gießform mit einem Deckel verschlossen, der mehrere radial außen angeordnete Saugrohre aufweist, die mit einer Vakuumpumpe verbunden sind und an solchen Stellen in den Innenraum der Gießform münden, dass an den Öffnungen der Saugrohre die Faserpreform 3 anliegt und von dem in den Rohren herrschenden Vakuum an der dafür vorgesehenen Stelle gehalten wird. Über eine im Deckel zentral angeordnete Speiseröffnung wird nun die Aluminium-Kupfer-Schmelze in die Gießform eingeleitet, wobei das in den Rohren herrschende Vakuum dafür sorgt, dass die hiervon an den Saugrohren gehaltene Faserpreform 3 von der Schmelze infiltriert wird. Zudem ist die Speiseröffnung mit einer Druckluftleitung verbunden, über die nach dem Füllen der Gießform mit der Schmelze Luft unter hohem Druck in die Gießform eingeleitet wird, die dazu führt, dass die Porosität der erstarrten Aluminium-Kupfer-Legierung reduziert wird, was eine für bestimmte Zwecke ausreichende Festigkeit des Kolbens ergibt.

Ist der Kolben aber für Zwecke vorgesehen, die eine höhere Festigkeit des Kolbenmaterials und damit eine weitere Verringerung der Porosität erfordern, wird der gegossene Kolbenrohling durch heißisostatisches Pressen (HIP) nachverdichtet.

Hierzu wird der Kolben in einen Autoklaven verbracht, in den Gas mit einer Temperatur von 400°C bis 600°C und mit einem Druck von 700 bis 1000 bar eingepresst wird. Nach einer Haltezeit von ca. 4 bis 6 Stunden ist der Verdichtungsprozess des Kolbenmaterials abgeschlossen, und der Kolben 1 weist in den Bereichen unter der Gussoberfläche ein dichtes Materialgefüge ohne Porosität auf.

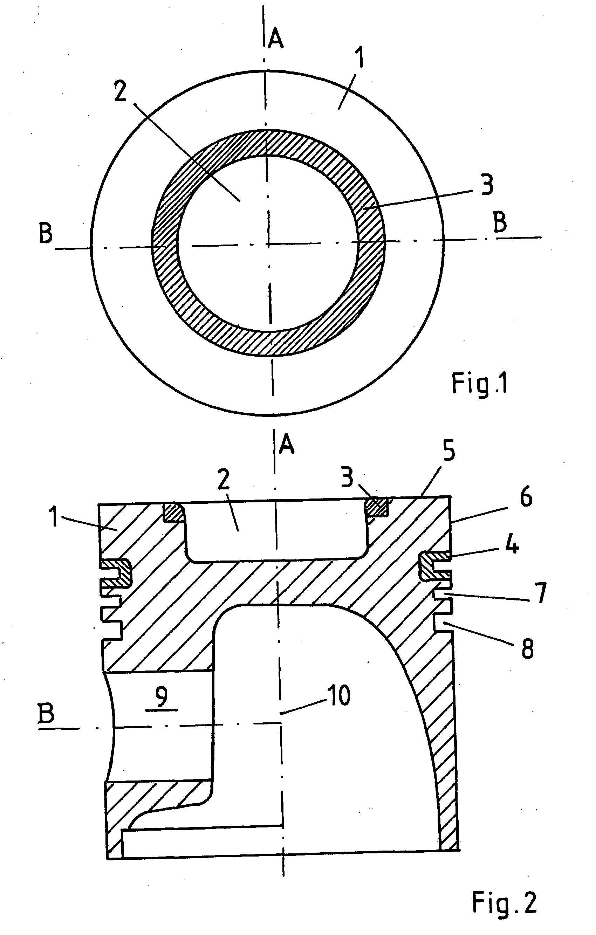

Im Anschluss daran wird dem Kolbenrohling mittels eines spanabhebender Fertigungsverfahren die endgültige, in Fig. 2 dargestellte Form gegeben.

Um die Qualität des Kolbens 1 weiter zu verbessern, können die Flanken und die Grundflächen der 2. und der 3. Ringnut 7 und 8, die bei einem Dieselkolben besonders stark belastet werden, auf dem Weg der anodischen Oxidation mit einer verschleißfesten Beschichtung versehen werden. Angewandt wird hierbei das Verfahren der selektiven Beschichtung, wobei die Kolbenbereiche, die nicht beschichtet werden sollen, abgedeckt werden. Im vorliegenden Fall wird der gesamte Kolben mit Ausnahme der 2. und 3. Ringnut 7 und 8 mit einer Abdeckschicht belegt, wonach der Kolben 1 an den Pluspol einer Gleichstromquelle angeschlossen und in einen Elektrolyten, beispielsweise Schwefelsäure, getaucht wird. Zudem werden eine oder mehrere, an den Minuspol der Gleichstromquelle angeschlossene Kathoden in den Elektrolyten getaucht. Bei Stromfluss bildet sich auf den Flächen der 2. und der 3. Ringnut eine kompakte und verschleißfeste Aluminiumoxidschicht.

Einer besonderen Belastung sind bei Dieselkolben auch die Nabenbohrungen 9 ausgesetzt. Eine Abhilfe schafft hierbei das Verfahren des Rollierens zur Feinbearbeitung der Nabenbohrungen 9, das für Kolben aus einer siliziumarmen Aluminium-Kupfer-Legierung besonders geeignet ist. Hierbei werden eine oder mehrere Rollen mit einer etwa senkrecht zur Nabenlauffläche gerichteten Kraft beaufschlagt und über die Lauffläche bewegt. Als Folge davon werden auch kleinste Unebenheiten der Nabenlauffläche geglättet. Zudem werden hierdurch Druckeigenspannungen in den Werkstoff eingebracht, wodurch die Festigkeit der Nabeninnenfläche verbessert wird. Diese Druckeigenspannungen bleiben aufgrund der hohen Warmfestigkeit siliziumarmer Aluminium-Kupfer-Legierungen eine lange Zeit erhalten und werden nicht durch Relaxation abgebaut. Weiterhin verläuft bei diesem Werkstoff die nach der Kaltverformung im Rahmen des Rollierens einsetzende Rekristallisation ohne eine wesentliche Volumenänderung, sodass unerwünschte Zugspannungen im Werkstoff vermieden werden.

### Bezugszeichenliste

- A: Querachse
- B: Nabenachse
- 1: Kolben
- 2: Verbrennungsmulde
- 3: Faserpreform
- 4: Ringträger
- 5: Kolbenboden
- 6: Feuersteg
- 7: 2. Ringnut
- 8: 3. Ringnut
- 9: Nabenbohrung
- 10: Kolbenachse

## Patentansprüche

1. Verfahren zur Herstellung eines Kolbens (1) für einen Verbrennungsmotor mit einer Verbrennungsmulde (2) mit folgenden Verfahrensschritten:
- Befestigung einer ringförmigen Faserpreform (3) mit einer zur Verstärkung des Randes der Verbrennungsmulde (2) geeigneten Form in einer Gießform für den Kolben (1) koaxial zur Kolbenachse (10) in der Ebene des Kolbenbodens (5),
- Befestigung eines Ringträgers (4) koaxial zur Kolbenachse (10) in einem der axialen Länge des Feuersteges (6) entsprechenden Abstand vom Kolbenboden (5) in der Gießform,
- Einleiten einer siliziumarmen Aluminium-Kupfer-Schmelze in die Gießform zur Herstellung eines Kolbenrohlings,
- Erzeugen einer Druckdifferenz zwischen der Aluminium-Kupfer-Schmelze und der Faserpreform (3) zur Infiltration der Aluminium-Kupfer-Schmelze in die Faserpreform (3),
- Nachverdichten des Kolbenrohlings durch heißisostatisches Pressen,
- Bearbeiten des Kolbenrohlings mittels eines spanabhebenden Fertigungsverfahrens zur Fertigstellung des Kolbens (1), wobei in den Kolben (1) eine 2. und 3. Ringnut (7, 8) eingearbeitet und Bolzennaben mit Nabenbohrungen (9) an den Kolben (1) angeformt werden.

2. Verfahren zur Herstellung eines Kolbens (1) nach Anspruch 1, **dadurch gekennzeichnet, dass** beim heißisostatischen Pressen der Kolben (1) für 4 bis 6 Stunden in einen Autoklaven verbracht wird, in den Gas mit einer Temperatur von 400°C bis 600°C und mit einem Druck von 700 bis 1000 bar eingepresst wird.

3. Verfahren zur Herstellung eines Kolbens (1) nach Anspruch 2, **dadurch gekennzeichnet, dass** auf den Flanken und den Grundflächen der 2. und 3. Ringnut (7, 8) mittels anodischer Oxidation eine Aluminiumoxidschicht gebildet wird, wobei der gesamte Kolben (1) mit Ausnahme der 2. und 3. Ringnut (7, 8) mit einer Abdeckschicht belegt wird, an den Pluspol einer Gleichstromquelle angeschlossen wird und in einen Elektrolyten getaucht wird, in dessen Behälter zudem mindestens eine an den Minuspol der Gleichstromquelle angeschlossene Kathode getaucht wird.

4. Verfahren zur Herstellung eines Kolbens (1) nach einem der Ansprüche 1 bis 3, **dadurch gekennzeichnet, dass** die Nabenbohrungen (9) mit Hilfe des Verfahrens des Rollierens geglättet und verfestigt werden.

## Claims

1. Method for producing a piston (1) for an internal combustion engine, having a combustion bowl (2), having the following method steps:
- attaching a ring-shaped fiber preform (3) having a shape that is suitable for reinforcing the edge of the combustion bowl (2) in a casting mold for the piston (1), coaxial to the piston axis (10) in the plane of the piston crown (5),
- attaching a ring insert (4) coaxial to the piston axis (10) in the casting mold, at a distance from the piston crown (5) that corresponds to the axial length of the top land (6),
- introducing an aluminum/copper melt low in silicon into the casting mold, for producing a piston blank,
- producing a pressure difference between the aluminum/copper melt and the fiber preform (3) such that infiltration of the aluminum/copper melt into the fiber preform (3) occurs,
- subsequent compacting of the piston blank by means of hot isostatic pressing,
- machining of the piston blank by means of a cutting machining for finishing the piston r (1), whereby a second and third ring groove (7, 8) are machined into the piston (1) and pin bosses with pin bores (9) are molded onto the piston (1).

2. Method for producing a piston (1) according to claim 1, **characterized in that** during hot isostatic pressing, the piston (1) is placed in an autoclave for 4 to 6 hours, into which gas is pressed at a temperature of 400°C to 600°C and a pressure of 700 to 1000 bar.

3. Method for producing a piston (1) according to claim 2, **characterized in that** an aluminum oxide coating is formed on the walls and the base surfaces of the second and third ring groove (7, 8), by means of anodic oxidation, whereby the entire piston (1), with the exception of the second and third ring groove (7, 8), is covered with a cover-up layer, connected with the plus pole of a direct current source and dipped into an electrolyte, in the container of which at least one cathode connected with the minus pole of the direct current source is dipped.

4. Method for producing a piston (1) according to one of the preceding claims, **characterized in that** the pin bores (9) are evened out and compacted using the method of rolling.

## Revendications

1. Procédé servant à fabriquer un piston (1) pour un moteur à combustion interne comprenant une cavité de combustion (2), comprenant les étapes de procédé suivantes consistant à :
- fixer une préforme à base de fibres (3) annulaire présentant une forme appropriée pour renforcer le bord de la cavité de combustion (2) dans un moule de coulée pour le piston (1) de manière coaxiale par rapport à l'axe de piston (10) dans le plan du fond de piston (5),
- fixer dans le moule de coulée un support annulaire (4) de manière coaxiale par rapport à l'axe de piston (10) à une distance, correspondant à la longueur axiale du cordon de feu (6), du fond de piston (5),
- introduire dans le moule de coulée une matière fondue d'aluminium et de cuivre pauvre en silicium afin de fabriquer une ébauche de piston,
- générer une pression différentielle entre la matière fondue d'aluminium et de cuivre et la préforme à base de fibres (3) afin d'infiltrer la matière fondue d'aluminium et de cuivre dans la préforme à base de fibres (3),
- compresser ultérieurement l'ébauche de piston par un pressage isostatique à chaud,
- usiner l'ébauche de piston au moyen d'un procédé de confection par enlèvement de copeaux afin de finaliser la fabrication du piston (1), une 2^{e} et une 3^{e} rainure annulaire (7, 8) étant pratiquées dans le piston (1) et des moyeux d'axe pourvus d'alésage de moyeu (9) étant formés au niveau du piston (1).

2. Procédé servant à fabriquer un piston (1) selon la revendication 1, **caractérisé en ce que** le piston (1) est placé, lors du pressage isostatique à chaud, pendant 4 à 6 heures, dans un autoclave, dans lequel du gaz est injecté à une température allant de 400 °C à 600 °C et à une pression allant de 700 à 1000 bar.

3. Procédé servant à fabriquer un piston (1) selon la revendication 2, **caractérisé en ce qu'**une couche d'oxyde d'aluminium est formée au moyen d'une oxydation anodique sur les flancs et les surfaces de base de la 2^{e} et de la 3^{e} rainure annulaire (7, 8), l'ensemble du piston (1) étant recouvert d'une couche de recouvrement à l'exception de la 2^{e} et de la 3^{e} rainure annulaire (7, 8), et étant raccordé au pôle positif d'une source de courant continu et étant immergé dans un électrolyte, dans le récipient duquel au moins une cathode raccordée au pôle négatif de la source de courant continu est en outre immergée.

4. Procédé servant à fabriquer un piston (1) selon l'une quelconque des revendications 1 à 3, **caractérisé en ce que** les alésages de moyeu (9) sont lissés et solidifiés à l'aide du procédé du roulage.
